# EUROPEAN PATENT APPLICATION

(11) **EP 4 793 308 A1**
(43) Date of publication of application: **19.08.2026**
(21) Application number: 26159029.3
(22) Date of filing: 17.02.2026
(51) Int. Cl.: C08J 7/02, C08J 7/12

(54) **FOIL FOR MANUFACTURING MICRO FLAKES AND METHOD OF MANUFACTURING MICRO FLAKES**

(30) Priority: 18.02.2025 IN 202511013660
(71) Applicant: Giesecke+Devrient Currency Technology GmbH, 81677 München (DE)
(72) Inventor: SCHERER, Maik Rudolf Johann, 83703 Gmund am Tegernsee (DE); SCHERER, Kai Hermann, 83703 Gmund am Tegernsee (DE); MAAK, Christian, 83703 Gmund am Tegernsee (DE)
(74) Representative: Patentanwälte Geyer, Fehners & Partner mbB

(57) **Abstract**

It is disclosed a foil for manufacturing micro flakes. The foil comprises a substantially flat substrate (2) having a surface, a multilayer film (6) comprising a stack of at least three sublayers, and a sacrificial layer (4), placed between the surface of the substrate (2) and the multilayer film (6). The sacrificial layer (4) is water soluble or water swellable, and an adhesion between the sublayers (8, 10, 12) within the multilayer film (6) is larger than an adhesion between the multilayer film (6) and the sacrificial layer (4), so that the multilayer film (6), when getting in contact with water, separates from the substrate (2) and breaks in a plurality of micro flakes which still comprise the at least three sublayers (8, 10, 12).

## Description

The invention relates to a foil for manufacturing micro flakes and a method of manufacturing micro flakes.

Foils for manufacturing micro flakes are known in the state of the art. These foils comprise a multilayer film applied to the surface of a substrate. In a method of manufacturing micro flakes, this multilayer film is released from the substrate using organic solvents. Disadvantageous the organic solvents are flammable and therefore dangerous in use, expensive and harm the environment.

It is, therefore, an object of the invention to provide a foil for manufacturing micro flakes and a method of manufacturing micro flakes reducing a destruction of the environment, reducing the manufacturing costs and reducing the risks for an user.

The invention is defined by the independent claims. The dependent claims relate to preferred embodiments.

The invention provides a foil for manufacturing micro flakes. The foil comprises a substantially flat substrate having a surface. The substrate can be optical transparent or semi-transparent and can be a polymer substrate or a polymer composite substrate. The polymer substrate is preferably made out of polyethylene terephthalate (PET), or out of polyethylene (PE), polypropylene (PP), polyvinyl chloride (PVC), polystyrene (PS), polyester like polycarbonate (PC), cellophane, polyactide (PLA), celluloseacetat or other common polymer types. Polymer substrates are preferred because they are resistant against external (for example physical or chemical) factors. The substrate comprises a maximum thickness of 75 µm, preferably 30 µm, highly preferably 20 µm.

Onto the surface of the substrate, a sacrificial layer is applied. The sacrificial layer is soluble or swellable in water. The sacrificial layer preferably comprises polyvinylpyrrolidone, modified starch, polyacrylic acid, polyethylene glycol, hydroxypropyl cellulose, hydroxyethyl cellulose, casein, gum arabic, carboxymethyl cellulose, polyvinyl alcohol, dextrin, or a mixture of two or more of the above-mentioned substances. Highly preferable the sacrificial layer comprises a naturally sourced and/or biodegradable polymer. The sacrificial layer has a maximum thickness of 25 µm, preferably 5 µm, highly preferably 1 µm, and is preferably optical transparent or semi-transparent. Because of the sacrificial layer being soluble or swellable in water, water is used as a solvent which is a green solvent and less expensive than common known organic solvents used in the state of the art. Organic solvents are not used. Hence, the disadvantages using organic solvents are avoided.

In embodiments, the sacrificial layer can comprise a water-soluble or water-swellable UV-embossing varnish, in which micro- or nanostructures can be formed using embossing processes such as hot embossing, cold embossing or UV embossing.

A multilayer film is applied onto the sacrificial layer. Hence, the sacrificial layer is placed between the surface of the substrate and the multilayer film. The multilayer film exhibits an optically variable effect, which is preferably caused by a diffractive, a plasmonic, or an interference effect, like e.g. a colour-shift effect. The multilayer film has a thin film structure comprising a stack of at least three individual sublayers having a thickness in micro- or nanometre range. The sublayers are preferably applied by means of physical vapour deposition (PVD) or chemical vapour deposition (CVD). The multilayer film has a maximum thickness of 20 µm, preferably 10 µm, highly preferably 2 µm, comprises at least a first absorber layer, a dielectric layer and a second absorber layer and has preferably a symmetrical structure in its stack of layers. It can highly preferably have the following layer sequence: absorber/dielectric material/reflector/dielectric material/ absorber; absorber/dielectric material /magnetic reflector/dielectric material/absorber; absorber/dielectric material/ reflector/ magnet/ reflector/ dielectric material/absorber; absorber/dielectric material/absorber.

The absorber, the reflector and/or the magnetic reflector comprise Cr, Ti, Cu, Ni, Al, Si, Ge, Ga, Fe, Co, Mn, Mg, Zn, Sn, V, Ag, or alloys thereof. The dielectric material comprises MgF₂, SiO₂, TiO₂, ZnS, Al₂O₃, ZnO, ZrO₂ or Sn₂O₃. Highly preferably the dielectric material comprises SiO₂, since it shows excellent stability in water. Furthermore, ions of dissolved SiO₂ do not have a negative impact on the corrosion stability of Al layers often deployed as reflector during contacting the sacrificial layer to water so that it dissolves or swells. Hence SiO₂ is highly preferably used in combination with at least one Al layer.

In preferred embodiments, the multilayer film is a colour-shift structure. Such a colour shift structure has a semi-transparent metal layer, a metallic mirror layer underneath and a dielectric layer spaced in between. Because of this layer structure only parts of the incident light spectrum are reflected, so that the reflection of white light (sunlight) appears coloured to an observer. The perceived colour depends on the angle of incidence of the light rays. Due to its multilayer structure, a colour-shift structure offers the observer a different image impression at different viewing angles and, for example, shows a different colour or brightness depending on the viewing angle.

An adhesion between the sublayers within the multilayer film is larger than an adhesion between the multilayer film and the sacrificial layer, so that the multilayer film, when getting in contact with water, separates from the substrate and breaks in a plurality of micro flakes which still comprise the at least three sublayers. As the sacrificial layer separates the multilayer film and the substrate, the substrate remains mechanically intact when the sacrificial layer gets dissolved or swelled. It can possibly be used for further production steps or can be provided as a substrate for another foil for manufacturing micro flakes again.

Fragments of the multilayer film form the micro flakes, which are released when the multilayer film is separated from the substrate, i.e. when the sacrificial layer dissolves or sponges up. Therefore, the micro flakes comprise the same stack of layers as the multilayer film. Preferably, the micro flakes have a platelet shape and a maximum lateral extension of 10 cm, preferably 1 cm, highly preferably 0.1 cm. Highly preferably the micro flakes comprise the colour-shift structure.

As the multilayer film breaks by itself, when it gets separated from the substrate, the micro flakes cannot be easily damaged - they have a uniform size. Additionally, the manufacturing method is easy as there is no need for an additional production step of breaking the multilayer film for producing the micro flakes - this lowers the manufacturing costs.

As the micro flakes comprise the same sequence of layers as the multilayer film, the micro flakes produce the same visual effect. The micro flakes exhibit an optically variable effect, which is preferably a diffractive, a plasmonic, or an interference effect, like e.g. colour-shift or varifeyeCC, or a combination of the effects.

When the sacrificial layer comprises a water-soluble or water-swellable UV-embossing varnish, in which micro- or nanostructures have been created using embossing processes such as hot embossing, cold embossing or UV embossing, the micro flakes can comprise the micro- or nanostructure of the sacrificial layer - they can be structured on their surface. Alternatively or additionally, the micro- or nanostructure of the sacrificial layer can create fracture points in the multilayer film, which clearly define positions on the multilayer film, in which the multilayer film breaks off, which results in clearly defined dimensions of the micro flakes. Hence, the micro flakes have a uniform and predetermined size.

In a preferred embodiment, the substrate is a web material comprising a maximum width of 5 meters, preferably 2 meters, highly preferably 1 meter and at least a length of 500 meters, preferably 5000 meters, highly preferably 10,000 meters. A web material is characterized by its long striped shape used e.g. as raw material in the production process of valuable documents. The web material is preferably provided rolled up in a coil.

Preferably, the foil for manufacturing micro flakes further comprises an adhesive layer, e.g. a heat-sealing adhesive layer. In this case, the foil for manufacturing micro flakes is a transfer foil which can be transferred onto the surface of a substrate, e.g. a valuable document.

The invention further provides a method of manufacturing micro flakes, the method comprising: Providing the foil for manufacturing micro flakes in any of the embodiments described above, and contacting the sacrificial layer to water so that it dissolves or swells, whereby the multilayer film gets separated from the substrate and breaks in a plurality of micro flakes which still comprise the at least three sublayers.

In the method, if the substrate is a web material, the web material substrate is rolled off the coil for further processing and is contacted to water afterwards.

In the following, embodiments of the invention are described with reference to enclosed drawings which drawings also may disclose the inventive features. These embodiments serve explanatory purposes only and should not limit the invention. If embodiments comprise a particular combination of elements or components, the description should not be constructed that all of these elements or components are essential to the invention. Other embodiments can, rather, comprise alternative elements or components, less elements or components or additional elements or components.

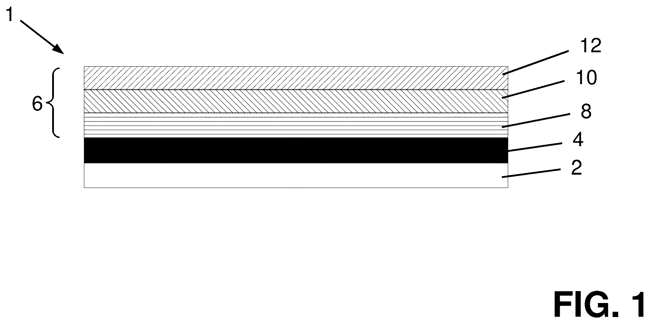

- Fig. 1: shows a foil for manufacturing particles.

Fig. 1 shows a foil 1 for manufacturing micro flakes. The foil 1 comprises a substantially flat substrate 2. The substrate 2 can be a web material with a maximum width of 5 meters and a minimum length of 500 meters, which is rolled off a coil. The substrate can be an optical transparent or semi-transparent polymer substrate or polymer composite substrate. The polymer foil comprises a maximum thickness of 75 µm, preferably 30 µm, highly preferably 20 µm.

Onto the surface of the substrate 2, a sacrificial layer 4 is applied. The sacrificial layer 4 is water-soluble or water-swellable, has a maximum thickness of 25 µm, preferably 5 µm, highly preferably 1 µm, and is preferably optical transparent or semi-transparent.

Optional (but not shown), the sacrificial layer 4 can be structured. In this case, the sacrificial layer 4 comprises a water-soluble or water-swellable UV-embossing varnish, in which micro- or nanostructures are embossed using embossing processes such as hot embossing, cold embossing or UV embossing. Because of the micro- or nanostructure, the micro flakes can be clearly defined by creating fracture points or can be provided with the micro- or nanostructure on its surface.

Onto the surface of the sacrificial layer 4, a multilayer film 6 is applied. In the embodiment of Fig. 1, the multilayer film 6 comprises a first absorber layer 8, a dielectric layer 10 and a second absorber layer 12, and exhibits an optically variable effect. Each of the layers 8, 10, 12 have a thickness in micro- or nanometer range. The layers 8, 10, 12 are preferably applied by means of physical vapour deposition (PVD) or chemical vapour deposition (CVD). In preferred embodiments, the multilayer film 6 is a colour-shift structure and the dielectric layer 10 comprises SiO₂.

When water is contacting the sacrificial layer 4, it dissolves or swells. Because of that, an adhesion between the sublayers 8, 10, 12 within the multilayer film 6 is larger than the adhesion between the multilayer film 6 and the sacrificial layer 4, so that the multilayer film 6 gets separated from the substrate 2 and breaks in a plurality of micro flakes. If the sacrificial layer 4 was structured before, the micro flakes break exactly at the fracture points. Each of the micro flakes comprises the multilayer film 6, especially the same layers 8, 10, 12 as the foil 1 before the sacrificial layer 4 was dissolved or swelled in water. Preferably, the micro flakes have a platelet shape and a maximum lateral extension of 10 cm, preferably 1 cm, highly preferably 0.1 cm. They can comprise the micro- or nanostructure as well.

Advantageous the micro flakes have a uniform size, even if there are no fracture points provided, because no external force for scrapping off and potentially damaging the micro flakes is needed to break them off the multilayer film 6.

### list of reference numerals

- 1: foil
- 2: substrate
- 4: sacrificial layer
- 6: multilayer film
- 8: absorber layer
- 10: dielectric layer
- 12: absorber layer

## Claims

1. A foil for manufacturing micro flakes, the foil comprising:
- a substantially flat substrate (2) having a surface,
- a multilayer film (6) comprising a stack of at least three sublayers, and
- a sacrificial layer (4), placed between the surface of the substrate (2) and the multilayer film (6), wherein
- the sacrificial layer (4) is water soluble or water swellable, and
- an adhesion between the sublayers (8, 10, 12) within the multilayer film (6) is larger than an adhesion between the multilayer film (6) and the sacrificial layer (4), so that the multilayer film (6), when getting in contact with water, separates from the substrate (2) and breaks in a plurality of micro flakes which still comprise the at least three sublayers (8, 10, 12).

2. The foil as claimed in claim 1, **characterized in that** the substrate (2) is a web material comprising a maximum width of 5 meters, preferably 2 meters, highly preferably 1 meters and at least a length of 500 meters, preferably 5000 meters, highly preferably 10,000 meters.

3. The foil as claimed in one of the above claims, **characterized in that** the substrate (2) is an optical transparent or semi-transparent polymer foil.

4. The foil as claimed in one of the above claims, **characterized in that** the substrate (2) comprises a maximum thickness of 75 µm, preferably 30 µm, highly preferably 20 µm.

5. The foil as claimed in one of the above claims, **characterized in that** the sacrificial layer (4) has a maximum thickness of 25 µm, preferably 5 µm, highly preferably 1 µm.

6. The foil as claimed in one of the above claims, **characterized in that** the sacrificial layer (4) is optical transparent or semi-transparent and preferably comprises a naturally sourced and/or biodegradable polymer.

7. The foil as claimed in one of the above claims, **characterized in that** the multilayer film (6) comprises at least a first absorber layer (8), a dielectric layer (10) and a second absorber layer (12).

8. The foil as claimed in claim 7, **characterized in that** the multilayer film (6) additionally comprises at least a second dielectric layer and a second absorber layer.

9. The foil as claimed in claim 7 or 8, **characterized in that** the dielectric layer (10) comprises SiO₂.

10. The foil as claimed in any of the above claims, **characterized in that** the multilayer film (6) comprises a colour-shift structure, preferably having magnetic properties.

11. The foil as claimed in one of the above claims, **characterized in that** the multilayer film (6) has a maximum thickness of 20 µm, preferably 10 µm, highly preferably 2 µm.

12. The foil as claimed in one of the above claims, **characterized in that** the sacrificial layer (4) comprises a water-soluble or water-swellable UV-, hot- or cold-embossing varnish.

13. The foil as claimed in claim 12, **characterized in that** the sacrificial layer (4) comprises a micro- or nanostructure.

14. The foil as claimed in claim 13, **characterized in that** the micro- or nanostructure creates fracture points in the multilayer film (6), at which the multilayer film (6) breaks while producing the micro flakes.

15. A method for manufacturing micro flakes, the method comprising:
- providing the foil as claimed in one of the above claims, and
- contacting the sacrificial layer (4) to water so that it dissolves or swells, whereby the multilayer film (6) gets separated from the substrate (2) and breaks in a plurality of micro flakes which still comprise the at least three sublayers (8, 10, 12).
